Europäisches Patentamt

European Patent Office

Office européen des brevets

(19)

(11) Veröffentlichungsnummer: **0 078 489**
**B1**

(12) **EUROPÄISCHE PATENTSCHRIFT**

(45) Veröffentlichungstag der Patentschrift:
**04.12.85**

(21) Anmeldenummer: **82109878.7**

(22) Anmeldetag: **26.10.82**

(51) Int. Cl.⁴: **C 10 G 33/04, C 08 G 65/32**

(54) **Verfahren zum Trennen von Erdölemulsionen vom Typ Wasser-in-Öl.**

(30) Priorität: **29.10.81 DE 3142954**

(43) Veröffentlichungstag der Anmeldung:
**11.05.83 Patentblatt 83/19**

(45) Bekanntmachung des Hinweises auf die Patenterteilung:
**04.12.85 Patentblatt 85/49**

(84) Benannte Vertragsstaaten:
**DE GB NL**

(56) Entgegenhaltungen:
**DE - A - 1 495 827**
**DE - A - 2 536 121**
**DE - B - 1 018 179**

(73) Patentinhaber: **HOECHST AKTIENGESELLSCHAFT,**
**Postfach 80 03 20, D-6230 Frankfurt am Main 80 (DE)**

(72) Erfinder: **Billenstein, Siegfried, Dr., Samerbergweg 8,**
**D-8261 Burgkirchen/Alz (DE)**
Erfinder: **Freundl, Hildegard, Watzmannring 9b,**
**D-8261 Burgkirchen/Alz (DE)**
Erfinder: **Wimmer, Ignaz, Burgstrasse 26,**
**D-8261 Unterau (DE)**
Erfinder: **Gohlke, Fritz Joachim, Dr.,**
**Hochstaufenstrasse 9, D-8261 Burgkirchen/Alz (DE)**
Erfinder: **Macenka, Johannes, Kastenstrasse 8,**
**D-8261 Burgkirchen/Alz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zum Trennen von Erdölemulsionen vom Typ Wasser-in-Öl durch Zusatz von Verbindungen aus der Gruppe der mit Hilfe von Kupplungsmitteln verbundenen Ethylenoxid-Propylenoxid-Blockpolymerisaten.

In der US-Patentschrift 2 674 619 und in der deutschen Patentschrift 1 018 179 sind Blockpolymerisate aus Ethylenoxid und Propylenoxid beschrieben. Sie bestehen aus einem Polyoxypropylenkern mit einem durchschnittlichen Molekulargewicht von mindestens 900 und zwei an dessen beiden Enden sich anschließenden Polyoxyethylen-Gruppen mit (insgesamt) mindestens 10 Gew.-% Ethylenoxid, bezogen auf das Gewicht des Blockpolymerisates. Aus der genannten deutschen Patentschrift ist ferner bekannt, daß diese Blockpolymerisate wirksame Erdölspalter darstellen, da mit ihrer Hilfe eine relativ schnelle Trennung von Erdölemulsionen des Wasser-in-Öl-Typs erreicht wird.

In der deutschen Offenlegungsschrift 1 495 827 und in der britischen Patentschrift 1 112 908 ist die Verwendung von mit Diisocyanaten als Kupplungsmittel verbundenen Ethylenoxid-Propylenoxid-Blockpolymerisaten zum Spalten von Rohölemulsionen beschrieben. Diese gekuppelten Ethylenoxid-Propylenoxid-Blockpolymeren werden durch Umsetzung der in der US-Patentschrift 2 674 619 und in der deutschen Patentschrift 1 018 179 beschriebenen Ethylenoxid-Propylenoxid-Blockpolymeren mit aliphatischen oder aromatischen Diisocyanaten erhalten.

Ein anderer Typ von gekuppelten Ethylenoxid-Propylenoxid-Blockpolymerisaten ist in der deutschen Offenlegungsschrift 2 536 121 und in der US-Patentschrift 4 189 609 beschrieben. Sie werden dadurch erhalten, daß Ethylenoxid- und Propylenoxid-Blockpolymerisate mit Formaldehyd oder Dialkylcarbonaten als Kupplungsagentien in Gegenwart von sauren beziehungsweise alkalischen Katalysatoren umgesetzt werden. Gemäß den beiden Druckschriften sind die so erhaltenen Produkte wegen ihrer besonderen chemischen Struktur leicht hydrolysierbar und eignen sich zum Einsatz als Schaumunterdrückungsmittel, als Benetzungsmittel bei der Papierherstellung und als Gleitmittel in der Textilindustrie. Die Möglichkeit einer Verwendung als Emulsionsspalter, insbesondere als Spalter von Erdölemulsionen des Wasser-in-Öl-Typs wird in den beiden Druckschriften nicht genannt und auch nicht angedeutet.

Es wurde nun überraschenderweise gefunden, daß gekuppelte Ethylenoxid-Propylenoxid-Blockpolymerisate von der in der US-Patentschrift 4 189 609 und in der deutschen Offenlegungsschrift 2 536 121 beschriebenen Art besonders wirksame Erdölspalter sind.

Demnach ist das erfindungsgemäße Verfahren zum Trennen von Erdölemulsionen vom Typ Wasser-in-Öl durch Zusatz von Verbindungen aus der Gruppe der mit Hilfe von Kupplungsmitteln verbundenen Ethylenoxid-Propylenoxid-Blockpolymerisate dadurch gekennzeichnet, daß den Erdölemulsionen Verbindungen, die durch Umsetzen von

a) einem Blockpolymerisat aus Propylenoxid und Ethylenoxid mit einem durchschnittlichen Molekulargewicht von 1650 bis 7000 und mit 10 bis 50 Gew.-% Ethylenoxid-Einheiten und 50 bis 90 Gew.-% Propylenoxid-Einheiten, bezogen auf das Blockpolymerisat, mit

b) Formaldehyd in einer 0,5- bis 2fachen stöchiometrischen Menge, bezogen auf die Menge an OH-Gruppen im eingesetzten Blockpolymerisat, in Gegenwart von sauren Katalysatoren und bei einer Temperatur von 50 bis 180° C erhalten worden sind,

in einer Menge von mindestens 5 ppm zugesetzt werden.

Die Blockpolymerisate a) und ihre Herstellung sind in den eingangs genannten Druckschriften ausführlich beschrieben.

Im Rahmen der vorliegenden Erfindung werden sie vorzugsweise dadurch hergestellt, daß von einem Polypropylenglykol mit einem durchschnittlichen Molekulargewicht von etwa 1500 bis 3500, vorzugsweise von etwa 1700 bis 2500, ausgegangen wird, an das man in Gegenwart von alkalischen Katalysatoren, vorzugsweise Kaliumhydroxid, Natriumhydroxid und/oder Natriummethylat, Ethylenoxid anlagert, bis das gewünschte Ethylenoxid-Propylenoxid-Blockpolymerisat vorliegt, wobei nach Beendigung der Adduktbildung der Katalysator im Produkt verbleibt, neutralisiert oder durch Filtration oder Ionenaustausch abgetrennt wird.

Die Blockpolymerisate a) besitzen ein durchschnittliches Molekulargewicht von vorzugsweise 1900 bis 3800 und einen Gehalt an Ethylenoxid von vorzugsweise 10 bis 30 Gew.-% und an Propylenoxid von vorzugsweise 70 bis 90 Gew.-%, Gewichtsprozente jeweils bezogen auf das Blockpolymerisat.

Die Umsetzung der Blockpolymerisate a) mit Formaldehyd erfolgt dadurch, daß sie mit der 0,5- bis 2fachen, vorzugsweise 0,8- bis 1,5fachen stöchiometrischen Menge Formaldehyd, bezogen auf die im eingesetzten Blockpolymerisat vorhandenen Hydroxyl-Gruppen (bestimmt als Hydroxyl-Zahl), in Gegenwart von sauren Katalysatoren und bei einer Temperatur von 50 bis 180°C, vorzugsweise 80 bis 160°C, zur Reaktion gebracht werden. Der Formaldehyd kann in Form von Paraformaldehyd oder in Form einer vorzugsweise 20- bis 40gew.-%igen wäßrigen Lösung (Formalin) eingesetzt werden. Es können auch entsprechende Mengen an Trioxan verwendet werden. Die Umsetzung wird vorzugsweise in der Weise durchgeführt, daß die Komponenten a), b) und der Katalysator allein (Umsetzung in Substanz) oder mit Lösungsmittel gemeinsam vorgelegt und unter Rühren auf die angegebene Temperatur erhitzt werden, wobei das entstehende Reaktionswasser entfernt wird. Die Umsetzung wird so lange durchgeführt, bis kein oder nahezu kein Reaktionswasser mehr gebildet wird. Das ist im allgemeinen nach 3 bis 15 Stunden der Fall.

Es können anorganische oder organische saure Katalysatoren eingesetzt werden. Geeignete Katalysatoren sind beispielsweise Halogenwasserstoffsäuren wie Salzsäure und Bromwasserstoffsäure, Phosphorsäuren, Schwefelsäure, Sulfonsäuren wie p-Toluolsulfonsäure und Dodecylbenzolsulfonsäure, Halogenessigsäuren wie Trichloressigsäure und Trifluoressigsäure, Perfluorcarbonsäuren wie Perfluoroctansäure, Perfluorsulfonsäuren wie Perfluoroctansulfonsäure und Mischungen hiervon. Bevorzugte saure Katalysatoren sind Schwefelsäure, Dodecylbenzolsulfonsäure und Para-Toluolsulfonsäure. Die Menge an sauren Katalysatoren liegt im katalytischen Bereich und beträgt demnach in der Regel 0,05 bis 3 Gew.-%, vorzugsweise 0,1 bis 1,5 Gew.-%, bezogen auf das Gewicht des eingesetzten Blockpolymerisates a).

Das entstehende Reaktionswasser wird — gegebenenfalls nach einer Vorkondensation bei 80 bis 120° C über 1 bis 6 Stunden — zweckmäßigerweise unter Anwendung von Vakuum (Wasserstrahlvakuum) oder durch Schlepp- bzw. azeotrope Destillation mit Hilfe eines organischen Lösungsmittels entfernt. Als organische Lösungsmittel kommen beispielsweise Hexan, Cyclohexan, Toluol, Xylol, Tetralin, Dialkylformale mit 1 bis 4 C-Atomen in der Alkylgruppe, beispielsweise Dimethylformal und Dibutylformal, oder Mischungen davon in Betracht. Bevorzugte Lösungsmittel sind Toluol, Xylol, Dialkylformale mit 1 bis 4 C-Atomen je Alkylgruppe oder Mischungen hiervon. Die Menge an Lösungsmittel kann in weiten Grenzen variieren. Sie richtet sich nach der eingesetzten Menge an Verbindung a).

Das erhaltene Reaktionsprodukt wird gegebenenfalls vom verwendeten Lösungsmittel befreit und mit einer dem verwendeten Säurekatalysator entsprechenden Menge Alkali, vorzugsweise mit Natriummethylat-Lösung, neutralisiert.

Die erfindungsgemäß zu verwendenden Verbindungen stellen gelb bis braun gefärbte, mehr oder weniger viskose Flüssigkeiten dar, die in organischen Lösungsmitteln, beispielsweise in Xylol, löslich sind.

Diese Verbindungen eignen sich besonders vorteilhaft zum Spalten von Erdölemulsionen des Wasser-in-Öl-Typs, da sie vor allem eine hohe Wirksamkeit auch bei relativ niedrigen Aufbereitungstemperaturen besitzen.

In den Erdölaufbereitungsanlagen werden die Wasser-in-Öl-Emulsionen je nach Viskosität auf 40 bis 70° C erwärmt und unter Zugabe geeigneter Demulgatoren (Spalter) oder mit Hilfe einer kombinierten elektrisch-chemischen Arbeitsweise auf die Abnahmespezifikationen der Raffinerien gebracht.

Die erfindungsgemäßen Verbindungen zeichnen sich nun insbesondere dadurch aus, daß sie auch bei niedrigen Aufbereitungstemperaturen nach kurzer Separationszeit abnahmespezifische Roherdöle liefern und daß dazu nur eine relativ geringe Menge erforderlich ist. Für diesen Einsatz ist es zweckmäßig, die neuen Produkte mit Lösungsmitteln zu verdünnen. Als Lösungsmittel werden zweckmäßigerweise Alkohole wie Methanol, Isopropanol und Butanol, aromatische Kohlenwasserstoffe wie Toluol und Xylol oder handelsübliche Lösungsmittel wie Mischungen aus höheren Aromaten (Solventnaphtha) verwendet.

Die Einsatzmengen der erfindungsgemäßen Verbindungen als Erdölemulsionsspalter liegen je nach Roherdölemulsion und Aufbereitungstemperatur im allgemeinen bei 5 bis 100 ppm, vorzugsweise bei 10 bis 50 ppm.

Die Erfindung wird nun an Beispielen noch näher erläutert.


Herstellung der beim erfindungsgemäßen Verfahren zu verwendenden Verbindungen


Beispiel 1


Blockpolymerisat (Komponente a)

Polypropylenglykol mit einem durchschnittlichen Molekulargewicht von 2000 wird in bekannter Weise in Gegenwart alkalischer Katalysatoren mit soviel Ethylenoxid umgesetzt, daß ein Ethoxylat mit 10 Gew.-% Ethylenoxid im Endprodukt erhalten wird (Hydroxyl-Zahl 55).

120 g des Blockpolymerisates, 10,6 g 35gew.-%ige wäßrige Formalinlösung (die 10,6 g entsprechen der 2fachen stöchiometrischen Menge Formaldehyd, bezogen auf die vorhandenen Hydroxyl-Gruppen) und 120 g Xylol werden gemeinsam in einem Rührkolben vorgelegt, der mit einem Auskreisaufsatz versehen ist. Nach Zusatz von 2,1 g Dodecylbenzolsulfonsäure (das sind 1,75 Gew.-%, bezogen auf das Gewicht des eingesetzten Blockpolymerisates) wird unter Rühren auf 140° C erhitzt und bei dieser Temperatur 6 Stunden lang unter Auskreisung des Reaktionswassers gehalten. Nach Abkühlen wird das Reaktionsprodukt mit einer Na-Methylatlösung neutralisiert.

Es liegt eine niedrigviskose, gelbbraune, ca. 50%ige xylolische Lösung des Reaktionsproduktes vor.

### Beispiele 2 bis 9

120 g eines Propylenoxid-Ethylenoxid-Blockpolymeren mit einem Polypropylenglykol-Kern vom durchschnittlichen Molekulargewicht 2000 und einem variierten Ethylenoxid-Gehalt von 15 bis 50 Gew.-% im Endprodukt (Komponente a, hergestellt analog Beispiel 1) werden jeweils mit 120 g Xylol, 2,1 g Dodecylbenzolsulfonsäure (das sind 1,75 Gew.-%, bezogen auf das Gewicht des eingesetzten Blockpolymerisates) und den in der nachstehenden Tabelle angegebenen Mengen an 35%iger wäßriger Formalinlösung (diese Mengen stellen jeweils die 2fache stöchiometrische Menge an Formaldehyd, bezogen auf vorhandene Hydroxyl-Gruppen, dar) gemeinsam im Rührkolben auf 140°C aufgeheizt und 6 Stunden bei dieser Temperatur gehalten, wobei das entstehende Wasser ausgeschleppt wird. Nach Abkühlen auf ca. 40°C wird wie in Beispiel 1 neutralisiert.

Man erhält jeweils eine niedrigviskose, gelbbraune, ca. 50%ige xylolische Lösung des Endprodukts.

| Beispiel | Ethylenoxid-Gehalt im Blockpolymeren (Gew.-%) | Hydroxyl-Zahl des Blockpolymeren | 35gew.-%ige wäßrige Formalinlösung (g) |
|---|---|---|---|
| 2 | 15 | 51 | 9,9 |
| 3 | 20 | 49,5 | 9,6 |
| 4 | 25 | 45,5 | 8,8 |
| 5 | 30 | 42 | 8,1 |
| 6 | 35 | 39,5 | 7,6 |
| 7 | 40 | 36,4 | 7,0 |
| 8 | 45 | 34,8 | 6,7 |
| 9 | 50 | 30,3 | 5,9 |

### Beispiel 10

150 g eines Propylenoxid-Ethylenoxid-Blockpolymeren mit einem Polypropylenglykol-Kern vom durchschnittlichen Molekulargewicht 1700 und einem Ethylenoxid-Gehalt von 27 Gew.-% im Endprodukt (hergestellt analog Beispiel 1, mit einer Hydroxyl-Zahl von 49) werden mit 2,15 g Paraformaldehyd 91%ig gemeinsam in einem Rührkolben vorgelegt, und unter Rühren werden 0,37 g konz. Schwefelsäure zugegeben (das sind 0,25 Gew.-% Schwefelsäure, bezogen auf das Gewicht des Blockpolymerisates). Die Formaldehyd-Menge entspricht 0,5 mol HCHO pro vorhandene Hydroxyl-Gruppe, das ist die 1fache stöchiometrische Menge. Nach Aufheizen auf 100°C wird 1 Stunde gerührt, dann bei 140°C eine weitere Stunde gehalten und anschließend Wasserstrahlvakuum angelegt. Unter einem Vakuum von etwa 2000 Pa wird nun 6 Stunden bei 140°C gerührt und das Reaktionswasser ausgetragen. Nach Neutralisation mit Na-Methylatlösung erhält man eine mittelviskose, braune Flüssigkeit, welche in organischen Lösungsmitteln, z. B. Xylol, gut löslich ist.

### Beispiel 11

150 g eines Blockpolymerisats mit einem Polypropylenglykol-Kern vom durchschnittlichen Molekulargewicht 3200 und einem Ethylenoxid-Gehalt von 30 Gew.-% im Endprodukt (Hydroxyl-Zahl 26) werden mit 1,16 g Paraformaldehyd 91%ig und 0,3 g konz. Schwefelsäure (0,2 Gew.-%, bezogen auf Blockpolymerisat) wie bei Beispiel 10 zur Reaktion gebracht. Die 1,16 g Paraformaldehyd entsprechen 0,5 mol Formaldehyd pro Hydroxylgruppe, das ist die 1fache stöchiometrische Menge.

Das neutralisierte Endprodukt ist bei 20°C eine viskose, dunkelbraune Flüssigkeit.

### Beispiel 12

100 g des in Beispiel 10 genannten Blockpolymeren und 50 g des in Beispiel 11 genannten Blockpolymeren werden mit 1,8 g Paraformaldehyd (91%ig) und 0,3 g konz. Schwefelsäure (0,2 Gew.-%, bezogen auf Blockpolymerisat) wie in Beispiel 10 beschrieben zur Reaktion gebracht. Die 1,8 g Paraformaldehyd entsprechen 0,5 mol Formaldehyd pro Hydroxylgruppe, das ist die 1fache stöchiometrische Menge.

Nach Neutralisation wird ein bei 20°C viskoses, braunes Produkt erhalten, welches in üblichen organischen Lösungsmitteln löslich ist.

### Verwendung der erfindungsgemäß vorgeschlagenen Verbindungen zum Spalten von Rohölemulsionen

### Beispiel 13

Rohöltestemulsion, das ist ein Rohöl aus dem süddeutschen Raum, das auf einen Wassergehalt von 51 Gew.-% und eine Salinität von 0,25 Gew.-% eingestellt worden ist.
Demulgiertemperatur: 50°C.

| Spaltertyp | Einsatz-menge ppm | Wasserabscheidung in Gew.-% nach | | | | | | | |
|---|---|---|---|---|---|---|---|---|---|
| | | 5' | 10' | 20' | 30' | 60' | 90' | 120' | 180' |
| Komponente a vom Beispiel 1 | 15 | keine Abscheidung | | | | | | | |
| Produkt vom Beispiel 1 | 15 | 0 | 0 | 0 | 1 | 6 | 16 | 30 | 44 |
| Komponente a vom Beispiel 2 | 15 | keine Abscheidung | | | | | | | |
| Produkt vom Beispiel 2 | 15 | 0 | 0 | 8 | 30 | 48 | 56 | 60 | 66 |
| Komponente a vom Beispiel 3 | 15 | 0 | 0 | 0 | 6 | 12 | 20 | 28 | 38 |
| Produkt vom Beispiel 3 | 15 | 0 | 0 | 22 | 40 | 60 | 64 | 68 | 72 |
| Komponente a vom Beispiel 4 | 15 | 0 | 0 | 6 | 18 | 36 | 44 | 52 | 64 |
| Produkt vom Beispiel 4 | 15 | 0 | 10 | 36 | 52 | 64 | 68 | 72 | 80 |
| Komponente a vom Beispiel 5 | 15 | 0 | 2 | 20 | 30 | 44 | 52 | 60 | 70 |
| Produkt vom Beispiel 5 | 15 | 0 | 16 | 44 | 60 | 68 | 70 | 76 | 82 |
| Komponente a vom Beispiel 6 | 15 | 0 | 4 | 24 | 34 | 52 | 60 | 64 | 72 |
| Produkt vom Beispiel 6 | 15 | 0 | 14 | 44 | 56 | 64 | 68 | 76 | 82 |
| Komponente a vom Beispiel 7 | 15 | 0 | 2 | 20 | 34 | 52 | 58 | 60 | 70 |
| Produkt vom Beispiel 7 | 15 | 0 | 6 | 32 | 56 | 64 | 66 | 72 | 80 |
| Komponente a vom Beispiel 8 | 15 | 0 | 2 | 20 | 32 | 48 | 56 | 58 | 64 |
| Produkt vom Beispiel 8 | 15 | 0 | 4 | 18 | 56 | 64 | 66 | 72 | 76 |
| Komponente a vom Beispiel 9 | 15 | 0 | 1 | 18 | 28 | 44 | 50 | 54 | 60 |
| Produkt vom Beispiel 9 | 15 | 0 | 2 | 18 | 54 | 62 | 66 | 70 | 74 |
| Komponente a vom Beispiel 10 | 10 | 0 | 0 | 0 | 6 | 28 | 32 | 36 | 40 |
| Produkt vom Beispiel 10 | 10 | 0 | 0 | 1 | 8 | 54 | 60 | 62 | 64 |
| Komponente a vom Beispiel 11 | 15 | 0 | 4 | 24 | 36 | 48 | 54 | 62 | 74 |
| Produkt vom Beispiel 11 | 15 | 0 | 18 | 48 | 64 | 72 | 76 | 80 | 86 |
| Produkt vom Beispiel 12 | 10 | 0 | 0 | 2 | 10 | 76 | 82 | 84 | 86 |

## Beispiel 14

Rohöltestemulsion gemäß Beispiel 13.
Demulgiertemperatur: 25° C.

| Spaltertyp | Einsatz-menge ppm | Wasserabscheidung in Gew.-% nach | | | | | | |
|---|---|---|---|---|---|---|---|---|
| | | 1 h | 2 h | 3 h | 4 h | 5 h | 7 h | 24 h |
| Komponente a vom Beispiel 1 | 100 | keine Abscheidung | | | | | | |
| Produkt vom Beispiel 1 | 100 | 0 | 0 | 1 | 2 | 4 | 6 | 8 |
| Komponente a vom Beispiel 2 | 100 | keine Abscheidung | | | | | | |
| Produkt vom Beispiel 2 | 100 | 0 | 8 | 10 | 16 | 24 | 44 | 70 |
| Komponente a vom Beispiel 3 | 100 | 0 | 1 | 2 | 4 | 5 | 6 | 8 |
| Produkt vom Beispiel 3 | 100 | 4 | 14 | 24 | 44 | 54 | 76 | 84 |
| Komponente a vom Beispiel 4 | 100 | 0 | 4 | 8 | 12 | 14 | 16 | 34 |
| Produkt vom Beispiel 4 | 100 | 4 | 24 | 62 | 84 | 88 | 92 | 92 |
| Komponente a vom Beispiel 5 | 100 | 2 | 8 | 14 | 18 | 24 | 32 | 64 |
| Produkt vom Beispiel 5 | 100 | 6 | 20 | 52 | 80 | 88 | 92 | 100 |
| Komponente a vom Beispiel 6 | 100 | 2 | 8 | 14 | 18 | 24 | 40 | 72 |
| Produkt vom Beispiel 6 | 100 | 2 | 12 | 26 | 34 | 42 | 60 | 86 |
| Komponente a vom Beispiel 7 | 100 | 2 | 8 | 14 | 18 | 24 | 38 | 70 |
| Produkt vom Beispiel 7 | 100 | 1 | 8 | 14 | 24 | 30 | 52 | 82 |
| Komponente a vom Beispiel 8 | 100 | 2 | 6 | 12 | 16 | 24 | 38 | 64 |
| Produkt vom Beispiel 8 | 100 | 2 | 6 | 10 | 20 | 28 | 48 | 76 |
| Komponente a vom Beispiel 9 | 100 | 0 | 4 | 6 | 10 | 16 | 26 | 58 |
| Produkt vom Beispiel 9 | 100 | 1 | 6 | 10 | 20 | 26 | 44 | 70 |
| Komponente a vom Beispiel 10 | 100 | 0 | 0 | 2 | 2 | 4 | 6 | 8 |
| Produkt vom Beispiel 10 | 100 | 4 | 16 | 30 | 48 | 56 | 80 | 86 |
| Komponente a vom Beispiel 11 | 100 | 2 | 10 | 18 | 35 | 50 | 60 | 72 |
| Produkt vom Beispiel 11 | 100 | 8 | 22 | 56 | 84 | 92 | 98 | 100 |
| Produkt vom Beispiel 12 | 100 | 10 | 18 | 63 | 86 | 96 | 100 | 100 |

## Patentansprüche

1. Verfahren zum Trennen von Erdölemulsionen vom Typ Wasser-in-Öl durch Zusatz von Verbindungen aus der Gruppe der mit Hilfe von Kupplungsmitteln verbundenen Ethylenoxid-Propylenoxid-Blockpolymerisate, dadurch gekennzeichnet, daß den Erdölemulsionen Verbindungen, die durch Umsetzen von

a) einem Blockpolymerisat aus Propylenoxid und Ethylenoxid mit einem durchschnittlichen Molekulargewicht von 1650 bis 7000 und mit 10 bis 50 Gew.-% Ethylenoxid-Einheiten und 50 bis 90 Gew.-% Propylenoxid-Einheiten, Gewichtsprozent bezogen auf das Blockpolymerisat, mit

b) Formaldehyd in einer 0,5- bis 2fachen stöchiometrischen Menge, bezogen auf die Menge an Hydroxyl-Gruppen im eingesetzten Blockpolymerisat, in Gegenwart von sauren Katalysatoren und bei einer Temperatur von 50 bis 180° C erhalten worden sind,

in einer Menge von mindestens 5 ppm zugesetzt werden.

2. Verfahren nach Anspruch 1, dadurch gekennzeichnet, daß als Komponente a) ein Blockpolymerisat aus Propylenoxid und Ethylenoxid mit einem durchschnittlichen Molekulargewicht von 1900 bis

0 078 489

3800 und mit 10 bis 30 Gew.-% Ethylenoxid-Einheiten und 70 bis 90 Gew.-% Propylenoxid-Einheiten eingesetzt wird.

3. Verfahren nach Anspruch 1, dadurch gekennzeichnet, daß als Komponente a) ein Blockpolymerisat aus Propylenoxid und Ethylenoxid eingesetzt wird, das hergestellt worden ist, indem an einem Polypropylenglykol mit einem durchschnittlichen Molekulargewicht von 1500 bis 3500 in Gegenwart von alkalischen Katalysatoren 10 bis 50 Gew.-% Ethylenoxid, bezogen auf das Blockpolymerisat, angelagert wird.

4. Verfahren nach Anspruch 1, dadurch gekennzeichnet, daß bei der Umsetzung der Formaldehyd in einer 0,8- bis 1,5fachen stöchiometrischen Menge eingesetzt wird.

5. Verfahren nach Anspruch 1, dadurch gekennzeichnet, daß die Umsetzung bei einer Temperatur von 80 bis 160° C durchgeführt wird.

6. Verfahren nach Anspruch 1, dadurch gekennzeichnet, daß den Erdölemulsionen 5 bis 100 ppm zugesetzt werden.

## Claims

1. A process for the separation of petroleum emulsions of the water-in-oil type by the addition of compounds from the group comprising ethylene oxide/propylene oxide block polymers bonded with the aid of couplers, characterised in that compounds which have been obtained by reaction of

a) a block polymer of propylene oxide and ethylene oxide, having an average molecular weight of 1,650 to 7,000 and containing 10 to 50% by weight of ethylene oxide units and 50 to 90% by weight of propylene oxide units, the percentages by weight being relative to the block polymer, with
b) formaldehyde in a 0.5-fold to 2-fold stoichiometric amount, relative to the amount of hydroxyl groups in the block polymer used, in the presence of acid catalysts and at a temperature of 50 to 180° C,

are added to the petroleum emulsions in an amount of at least 5 ppm.

2. A process as claimed in claim 1, characterised in that a block polymer of propylene oxide and ethylene oxide, having an average molecular weight of 1,900 to 3,800 and containing 10 to 30% by weight of ethylene oxide units and 70 to 90% by weight of propylene oxide units, is used as component a).

3. A process as claimed in claim 1, characterised in that a block polymer of propylene oxide and ethylene oxide used as component a) has been prepared by adding 10 to 50% by weight of ethylene oxide, relative to the block polymer, onto a polypropylene glycol having an average molecular weight of 1,500 to 3,500, in the presence of alkaline catalysts.

4. A process as claimed in claim 1, characterised in that the formaldehyde is used in the reaction in a 0.8-fold to 1.5-fold stoichiometric amount.

5. A process as claimed in claim 1, characterised in that the reaction is carried out at a temperature of 80 to 160° C.

6. A process as claimed in claim 1, characterised in that 5 to 100 ppm are added to the petroleum emulsions.

## Revendications

1. Procédé pour dissocier des émulsions de pétrole du type huile dans l'eau par addition de composés du groupe comprenant des polymères séquencés d'oxyde d'ethylène et d'oxyde de propylène, qui ont été liés par des copulants, procédé caractérisé en ce que l'on ajoute aux émulsions de pétrole, en une quantité d'au moins 5 ppm, des composés qui ont été obtenus par réaction

a) d'un polymère séquencé d'oxyde de propylène et d'oxyde d'éthylène ayant un poids moléculaire moyen compris entre 1650 et 7000 et ayant de 10 à 50% en poids de motifs d'oxyde d'éthylène et de 50 à 90% en poids de motifs d'oxyde de propylène, les pourcentages en poids étant rapportés au poids du polymère séquencé, avec
b) le formaldéhyde mis en jeu en une quantité 0,5 à 2 fois stoichiométrique, par rapport à la quantité des groupes OH dans le polymère séquencé mis en jeu, en présence de catalyseurs acides à une température de 50 à 180° C.

2. Procédé selon la revendication 1, caractérisé en ce que l'on met en jeu comme composante a) un polymère séquencé d'oxyde de propylène et d'oxyde d'éthylène ayant un poids moléculaire moyen compris entre 1900 et 3800 et ayant de 10 à 30% en poids de motifs d'oxyde d'éthylène et de 70 à 90% en poids de motifs d'oxyde de propylène.

3. Procédé selon la revendication 1, caractérisé en ce que l'on met en jeu comme composante a) un

7

polymère séquencé d'oxyde de propylène et d'oxyde d'éthylène qui a été préparé par additiion de 10 à 50% en poids d'oxyde d'éthylène, par rapport au polymère séquencé, à un polypropylène-glycol ayant un poids moléculaire moyen compris entre 1500 et 3500, en présence de catalyseurs alcalins.

4. Procédé selon la revendication 1, caractérisé en ce que l'on met en jeu le formaldéhyde, dans la réaction, en une quantité 0,8 à 1,5 fois stoichiométrique.

5. Procédé selon la revendication 1, caractérisé en ce que l'on réalise la réaction à une température de 80 à 160° C.

6. Procédé selon la revendication 1, caractérisé en ce que l'on ajoute aux émulsions de pétrole de 5 à 100 ppm.